# EUROPÄISCHE PATENTANMELDUNG

(11) **EP 0 905 955 A2**
(43) Veröffentlichungstag der Anmeldung: **31.03.1999**
(21) Anmeldenummer: 98440179.4
(22) Anmeldetag: 21.08.1998
(51) Int. Cl.: H04M 3/42

(54) **Verfahren zum Bereitstellen von Funktionen an einem Endgerät für ein Telekommunikationsnetz, sowie Endgerät und Datenbereitstellungseinrichtung hierfür**

(30) Priorität: 29.09.1997 DE 19742921; 01.04.1998 DE 19814463
(71) Anmelder: ALCATEL, 75088 Paris (FR)
(72) Erfinder: Siegmund, Gerd, 70435 Stuttgart (DE)
(74) Vertreter: Brose, Gerhard, Dipl.-Ing.

(57) **Zusammenfassung**

Die vorliegende Erfindung betrifft ein Verfahren zum Bereitstellen von Funktionen an einem Endgerät (TER) für ein Telekommunikationsnetz, sowie ein Endgerät (TER) hierfür und eine Datenbereitstellungseinrichtung (CS) hierfür, wobei das Endgerät (TER) über zumindest eine erste Verbindung (VC) mit zumindest einer ersten Kommunikationspartnereinrichtung (CP) verbindbar ist und wobei die Funktionen an dem Endgerät (TER) mit Hilfe von Daten erbracht werden können, die von der Datenbereitstellungseinrichtung (CS) in das Endgerät (TER) geladen werden. Dazu wird vorgeschlagen, daß parallel zu der ersten Verbindung (VC) eine zweite Verbindung (VL) über eine Teilnehmeranschlußleitung zwischen dem Endgerät (TER) und der Datenbereitstellungseinrichtung (CS) eingerichtet wird daß die Daten von der Datenbereitstellungseinrichtung (CS) an das Endgerät (TER) über die zweite Verbindung (VL) gesendet werden.

## Beschreibung

Die vorliegende Erfindung betrifft ein Verfahren zum Bereitstellen von Funktionen an einem Endgerät für ein Telekommunikationsnetz gemäß dem Oberbegriff des Anspruchs 1, sowie ein Endgerät hierfür gemäß dem Oberbegriff des Anspruchs 9 und eine Datenbereitstellungseinrichtung hierfür gemäß dem Oberbegriff des Anspruchs 10.

Endgeräte für Telekommunikationsnetze, insbesondere Fernsprechapparate, sind mit verschiedenen Funktionen ausgestattet, die die Bedienung der Endgeräte vereinfachen oder erleichtern. Viele dieser Funktionen sind in die Endgeräte fest eingebaut und sofort verfügbar, z.B. eine Wahlwiederholung, mit der eine zuvor getätigte Rufnummernwahl mit einem einzigen Tastendruck auf eine spezielle Wahlwiederholungstaste wiederholt werden kann. Vor der Nutzung anderer Funktionen müssen die Endgeräte jedoch eigens programmiert werden, z.B. muß eine Rufnummernbelegung für eine Kurzwahltaste, mit der eine aus mehreren Ziffern bestehende Rufnummer durch einen einzigen Tastendruck abgerufen werden kann, in ein Endgerät eingegeben und im Endgerät abgespeichert werden.

Für Mobilfunk-Telekommunikationsnetze sind Endgeräte bekannt, die den Namen eines Anrufenden in einer Anzeigevorrichtung anzeigen können. Dazu muß in einen Speicher eines solchen Endgerätes die Rufnummer und der Name des Anrufenden von einem Bediener des Endgerätes eingegeben werden. Bei einem ankommenden Ruf wird in Mobilfunk-Telekommunikationsnetzen die Rufnummer des Anrufenden übermittelt, so daß das Endgerät in seinem Speicher den Namen des Anrufenden anhand eines Vergleiches der übermittelten Rufnummer mit der gespeicherten Rufnummer auffinden und auf der Anzeigevorrichtung anzeigen kann.

Umfangreichere und individuell anpassbare Funktionen eines Endgerätes, wie z.B. eine Bedienoberfläche, können mit den Mitteln eines Endgerätes nur schwer eingerichtet werden, da ein Endgerät meist neben einer numerischen Tastatur nur einige Spezialtasten anbietet. Deshalb werden die individuell anpassbaren Funktionen eines Endgerätes oftmals auf einem Datenverarbeitungsgerät, z.B. einem Personal Computer, konfiguriert, das neben einer umfangreichen Tastatur auch über eine graphische Eingabehilfe, z.B. eine Maus, verfügt. Die konfigurierten Funktionen werden dann von dem Datenverarbeitungsgerät als Softwarepaket über eine Verbindungsleitung auf das Endgerät geladen.

Weiterhin ist es in manchen Mobilfunk-Telekommunikationsnetzen möglich, daß bei der ersten Anmeldung eines Endgerätes in einem solchen Mobilfunk-Telekommunikationsnetz über den sogenannten Short Message Service (SMS) Software, insbesondere Software für die Gestaltung einer Bedienoberfläche des Endgerätes, von einem Server in das Endgerät geladen wird. Dann wird von dem Endgerät z.B. der Name des Dienstleisters angezeigt, über den das Endgerät Telekommunikationsdienste des Mobilfunk-Telekommunikationsnetzes in Anspruch nehmen kann. Durch gezielte Anwahl des Servers und eine gezielte Anforderung kann das Endgerät auch weitere oder modifizierte Software von dem Server über den Short Message Service nachladen. Während eines solchen Software-Nachladens ist das Endgerät allerdings nicht für seinen hauptsächlichen Gebrauch verfügbar, nämlich die Verarbeitung von ankommenden oder abgehenden Rufen, da die nachgeladene Software in den Betriebsablauf des Endgerätes eingreift und deshalb zunächst in die sonstige Software des Endgerätes integriert werden muß, bevor wieder Rufe bearbeitet werden können.

Aufgabe der Erfindung ist es, Funktionen an einem Endgerät für ein Telekommunikationsnetz durch Daten bereitzustellen, die von einer Datenbereitstellungseinrichtung geladen werden können.

Diese Aufgabe wird durch ein Verfahren gemäß der technischen Lehre des Anspruchs 1, ein Endgerät gemäß der technischen Lehre des Anspruchs 9 und eine Datenbereitstellungseinrichtung der technischen Lehre des Anspruchs 10 gelöst. Weitere vorteilhafte Ausgestaltungen der Erfindung sind den abhängigen Ansprüchen und der Beschreibung zu entnehmen.

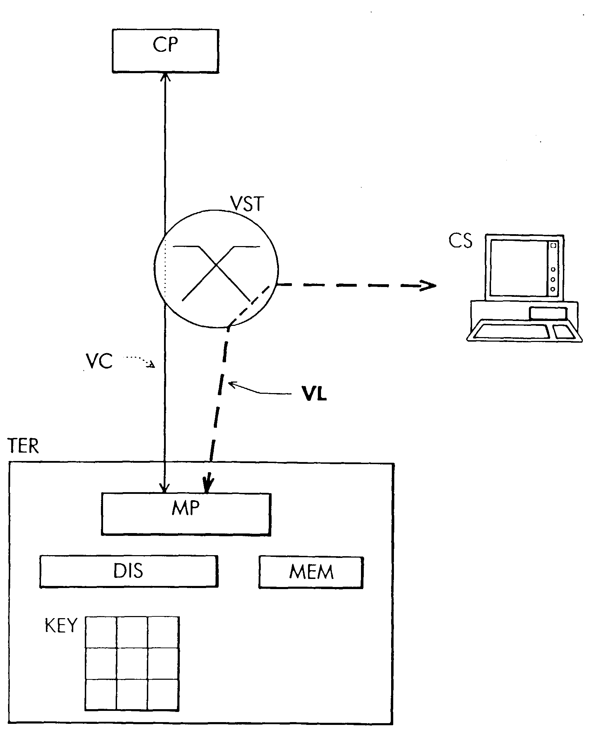

Im folgenden werden die Erfindung und ihre Vorteile anhand eines Ausführungsbeispiels unter Zuhilfenahme der Zeichnung dargestellt.
- Die Figur: zeigt ein Beispiel einer erfindungsgemäßen Anordnung aus einem Endgerät TER und einem Server CS, die über eine Verbindung VL miteinander verbunden sind.

In der Figur ist eine beispielhafte Anordnung dargestellt, mit der die Erfindung ausgeführt werden kann. Eine Verbindung VL, die mit einer dicken gestrichelten Linie dargestellt ist, verbindet ein Endgerät TER mit einem Server CS. Das Endgerät TER enthält eine zentrale Steuereinheit MP, die die Funktionen des Endgerätes TER steuert, eine Anzeigevorrichtung DIS, die zur Visualisierung von Informationen dient, ein Tastenfeld KEY, mit dem das Endgerät TER bedient werden kann und eine Speichereinrichtung MEM, in der Daten für Grundfunktionen und Daten für Sonderfunktionen abgelegt sind. Das Telekommunikationsnetz ist hier symbolisch dargestellt durch eine Vermittlungsstelle VST und kann aus weiteren Knotenpunkten und Verbindungsleitungen bestehen. Der Server CS steht beispielhaft für eine Datenbereitstellungseinrichtung, die Daten zur Verfügung stellen kann. Es kann sich bei der Datenbereitstellungseinrichtung um einen einzelnen Rechner oder auch um ein Netzwerk aus mehreren Rechnern handeln. Weiterhin ist eine Verbindung VC dargestellt, die ebenfalls über die Vermittlungsstelle VST geführt ist und das Endgerät TER mit einem Kommunikationspartner CP, z.B. einem weiteren Endgerät, verbindet. Das Endgerät TER verfügt über die Grundfunktionen eines Fernsprechapparates, wie z.B. Rufnummernwahl, Spracheingabe und Sprachausgabe. Weiterhin kann das Endgerät TER nach Laden von Daten weitere Sonderfunktionen anbieten, wie z.B. eine besondere Information auf der Anzeigevorrichtung DIS oder ein besonderes Layout derselben. Die Sonderfunktionen können sowohl unmittelbar nach deren Empfang von der Steuereinheit MP ausgeführt als auch für eine spätere Verwertung in der Speichereinrichtung MEM gespeichert werden.

Auf der Verbindung VL kann das Endgerät TER mit dem Server CS Daten austauschen. Die Verbindung VL kann vor, nach und während einer Verbindung VC zu dem Kommunikationspartner CP bestehen und ist von der Verbindung VC zu dem Kommunikationspartner CP unabhängig. So kann das Endgerät TER jederzeit mit Daten von dem Server CS versorgt werden. Die Verbindung VL kann eine Sprachverbindung auf einer separaten Teilnehmeranschlußleitung sein. Die Verbindung VC zu dem Kommunikationspartner CP und die Verbindung VL können jedoch auch auf je einem Kanal einer gemeinsam genutzten Teilnehmeranschlußleitung zu dem Endgerät TER eingerichtet werden Der Kanal für die Verbindung VL kann z.B. ein B-Kanal auf einer ISDN-Teilnehmeranschlußleitung sein oder ein In-Band-Signalisierungskanal, der von dem für die Verbindung VC zu dem Kommunikationspartner CP genutzten Kanal unabhängig ist.

Es ist aber auch möglich, die Verbindung VL als eine virtuelle Verbindung einzurichten. Virtuelle Verbindungen sind logische Verbindungen in einem Telekommunikationsnetz zwischen Partnern, die an das Telekommunikationsnetz angeschlossen sind.

Virtuelle Verbindungen sind in paketvermittelten Telekommunikationsnetzen, wie z.B. ATM-Netzwerken, X.25-Netzwerken und auf den D-Kanälen von ISDN-Netzwerken, üblich. In einem paketvermittelten Telekommunikationsnetz wird eine virtuelle Verbindung z.B. dadurch aufgebaut, daß eine Information über das gewünschte Ziel der virtuellen Verbindung an das Telekommunikationsnetz versendet wird. Das Telekommunikationsnetz wertet diese Information dann so aus, daß es später auf der virtuellen Verbindung Datenpakete an das gewünschte Ziel übertragen kann. Wenn in einem Zeitabschnitt kein Datenpaket zu dem Ziel gesendet werden muß, kann die Übertragungskapazität des paketvermittelten Telekommunikationsnetzes für die Übermittlung von Datenpaketen zwischen anderen Quellen und Zielen des Telekommunikationsnetzes genutzt werden. Eine virtuelle Verbindung beansprucht nur dann Übertragungskapazität eines Telekommunikationsnetzes, wenn sie zur Übertragung genutzt wird, es sei denn, für die virtuelle Verbindung wird für eine mögliche Übertragung eine feste Übertragungskapazität in dem Telekommunikationsnetz reserviert.

Soll eine virtuelle Verbindung von einem Quellpunkt über einen Knotenpunkt zu einem Ziel punkt geführt werden, so kann sie auch hergestellt werden, indem im Quellpunkt oder im Knotenpunkt Informationen über Wegesuche für die virtuelle Verbindung abgelegt sind. Es kann z.B. in dem Quellpunkt der virtuellen Verbindung eine Adressinformation über den Zielpunkt eingespeichert sein, so daß jederzeit die virtuelle Verbindung in eine reale Verbindung umgewandelt werden kann, indem z.B. eine Rufverbindung von dem Quellpunkt zu dem Zielpunkt aufgebaut wird. Es können jedoch auch in dem Knotenpunkt Informationen vorhanden sein, mit denen der Knotenpunkt von dem Quellpunkt empfangene Daten zu dem Zielpunkt weiterleiten kann. Im vorliegenden Beispiel müßte also wenigstens in einem der Endpunkte Endgerät TER oder Server CS die Adresse, z.B. eine Rufnummer, des jeweiligen Partners abgelegt sein oder die Vermittlungsstelle VST hat eine Zuordnungsbeziehung zwischen dem Endgerät TER und dem Server CS gespeichert und kann so Daten von dem Endgerät TER an den Server CS oder Daten von dem Server CS an das Endgerät TER weitervermitteln.

Ein System aus Dienstbereitstellungseinrichtung und einem mit Steuerdaten ladbaren Endgerät ist in der Produktlinie ADSI (Analog Display Services Interface) von Alcatel Telecom realisiert. In der Schrift 3CL 00300 0001 TQZZA-Ed. 1-DC/10/96 der Alcatel Telecom wird unter dem Absatz "Alcatel 1461" beschrieben, wie sich ein Bediener mit einem Endgerät, hier einem Alcatel ADSI-Endgerät mit der Bezeichnung "Alcatel 2595", bei der Dienstbereitstellungeinrichtung über eine Teilnehmeranschlußleitung anmeldet und dort unter vorgefertigten Dienstpaketen auswählt. Diese Dienstpakete sind in einer von dem ADSI-Endgerät auswertbaren Sprache verfaßt und werden von der Dienstbereitstellungeinrichtung auf das ADSI-Endgerät über die Teilnehmeranschlußleitung geladen. Das ADSI-Endgerät führt die in den Dienstpaketen enthaltenen Funktionen aus, so daß durch das Zusammenwirken von ADSI-Endgerät und Dienstbereitstellungseinrichtung dem Bediener ein Dienst angeboten wird. Das ADSI-Endgerät fungiert in diesem Fall als eine bedienerfreundliche Schnittstelle zu der Dienstbereitstellungseinrichtung, eben als ein "Services Interface", nicht jedoch als ein Fernsprechapparat mit Komfortfunktionen. Für ein Endgerät typische Funktionen, wie z.B. ein persönliches Telefonbuch oder die eingangs erwähnte Anzeige des Anrufernamens bei ankommenden Rufen, müssen auf dem ADSI-Endgerät eigens programmiert werden, weil das ADSI-Endgerät diese Funktionen ohne die Hilfe der Dienstbereitstellungseinrichtung anbieten muß. Dies wird in der Schrift 3CL 00301 0001 TQZZA-Ed. 2-DC/10/96 der Alcatel Telecom, die sich speziell mit dem ADSI-Endgerät "Alcatel 2595" befaßt, unter den Abschnitten "Directory" und "Caller Identification Management" deutlich. Bei der vorliegenden Erfindung können jedoch solche endgerätetypischen Funktionen gemeinsam durch das Endgerät TER und dem Server CS erbracht werden, wie im folgenden noch näher erläutert wird.

Über die Verbindung VL kann das Endgerät TER von dem Server CS Daten abfragen. Wenn z.B. auf dem Server CS eine Gebühreninformation über den aktuellen Stand der in einer Periode aufgelaufenen Gebühren für den Teilnehmeranschluß des Endgerätes TER abgelegt ist, kann das Endgerät TER, z.B. ausgelöst durch eine Zeitsteuerung zu Zeiten geringer Netzlast, den Server CS nach der Gebühreninformation fragen. Diese Gebühreninformationen werden dann von dem Server CS versendet, von der Steuereinheit MP empfangen und an die Anzeigevorrichtung DIS gesendet, wo sie dann angezeigt werden.

Anderseits kann der Server CS das Endgerät TER von sich aus mit Nachrichten versorgen. Ein Nutzer des Servers CS, z.B. ein Diensteanbieter von Telekommunikationsdienstleistungen, kann an dem Server CS einen Nachrichtentext eingeben, z.B. einen Nachrichtentext mit dem aktuellen Gebührentarif für das Telekommunikationsnetz. Der Nachrichtentext wird dann von dem Server CS an das Endgerät TER gesendet und vom Endgerät TER über die Anzeigevorrichtung DIS angezeigt.

Weiterhin kann das Endgerät TER mit Funktionen ausgestattet werden, die als ausführbare Programme oder Programmbausteine, z.B. sogenannte Makros, an dem Server CS erzeugt und dann über die Verbindung VL in das Endgerät TER geladen werden. Das Endgerät TER speichert diese Programme in seinem Speicher MEM ab und kann die Programme jederzeit zur Bereitstellung von Funktionen aus seinem Speicher MEM abrufen und in der Steuereinheit MP ausführen.

Endgeräte, die Software von einer externen Quelle beziehen können oder aus der Ferne konfigurierbar sind, sind bekannt. Die Software wird dann über einen speziellen Download-Vorgang von der externen Quelle auf das Endgerät geladen und in dem Endgerät für eine spätere Verwendung gespeichert. Wird für den Download-Vorgang eine Teilnehmeranschlußleitung verwendet, wie z.B. bei dem aus P44 28 068 bekannten Endgerät, ist das Endgerät während des Download-Vorgangs für weitere Anrufer nicht mehr erreichbar. Da von dem Endgerät TER die Verbindung VL zu dem Server CS jedoch parallel zu der Verbindung VC zu dem Kommunikationspartner CP bestehen kann, kann das Endgerät TER gleichzeitig Daten für Funktionen laden und eine Kommunikation mit dem Kommunikationspartner CP anbieten. Das Endgerät TER bleibt also auch während eines Download-Vorgangs auf der Verbindung VC erreichbar. Außerdem muß jeder Download-Vorgang über eine besondere Bedienung des Endgerätes durch den Bediener eigens angestoßen werden, so daß sich der Bediener Kenntnisse aneignen muß, welche externe Quelle dem Endgerät Software zur Verfügung stellen kann und wie er einen Download-Vorgang an dem Endgerät auslöst. Auch die Nutzung der Dienste der ADSI-Dienstbereitstellungseinrichtung ist für das bereits erwähnte ADSI-Endgerät erst möglich, nachdem die ADSI-Dienstbereitstellungseinrichtung das ADSI-Endgerät registriert und dessen Zugang kontrolliert hat. Inwieweit eine besondere Bedienung des ADSI-Endgerätes durch den Bediener, z.B. die Eingabe eines Identifizierungscodes oder eines Passwortcodes, erforderlich ist oder ob sich das ADSI-Endgerät ohne Bedienhandlung bei der ADSI-Dienstbereitstellungseinrichtung anmeldet, ist in den vorgenannten Schriften über die ADSI-Technik nicht erklärt.

Weil der Server CS über eine Teilnehmeranschlußleitung das Endgerät TER mit Funktionen versehen kann, muß der Server CS nicht im Besitz oder im unmittelbaren Verfügungsbereich des Bedieners des Endgerätes TER sein. Der Bediener kann z.B. einen Dritten, z.B. den bereits erwähnten Diensteanbieter, damit beauftragen, an dem Server CS Funktionen für das Endgerät TER zu konfigurieren und diese Funktionen als Daten von dem Server CS an das Endgerät TER über die Verbindung VL zu laden. In diesem Fall muß sich der Bediener des Endgerätes TER keine Kenntnisse über die Programmierung seines Endgerätes TER aneignen. Eine Funktion könnte z.B. die eingangs erwähnte Rufnummernbelegung für eine Kurzwahltaste sein oder die Anzeige einer besonderen Information an der Anzeigevorrichtung DIS oder auch eine besondere Gestaltung der Anzeige in der Anzeigevorrichtung DIS. Der Diensteanbieter kann auch Funktionen an dem Server CS warten, d.h. von sich aus an aktuelle Erfordernisse anpassen oder eventuell aufgetretene Fehler in den Funktionen beseitigen. Die Daten der überarbeiteten Funktionen werden dann erneut vom Server CS auf das Endgerät TER geladen.

Weitere vorteilhafte Möglichkeiten bietet die Erfindung, wenn parallel zu der Verbindung VL zwischen dem Endgerät TER und einem weiteren Ziel eine weitere Verbindung aufgebaut wird. In der Figur ist eine solche Verbindung in Form der Verbindung VC zu dem Kommunikationspartner CP dargestellt. Sowohl parallel zu einem ankommenden Ruf von dem Kommunikationspartner CP als auch parallel zum Aufbau eines abgehenden Rufes an den Kommunikationspartner CP und während des Bestehens der Verbindung zu dem Kommunikationspartner CP kann das Endgerät TER über die Verbindung VL auf Daten des Servers CS zugreifen.

Wenn das Endgerät TER an ein ISDN-Telekommunikationsnetz oder an ein Telekommunikationsnetz mit CLASS-Leistungsmerkmalen (Custom Local Area Signaling Service) angeschlossen ist, so wird bei einem Ruf des Kommunikationspartners CP auf der Verbindung VC von dem Endgerät TER eine sogenannte CLIP-Nachricht (Calling Line Identification Presentation) empfangen. In der CLIP-Nachricht wird die Rufnummer des Anrufenden übermittelt. Da das Endgerät TER über Basisfunktionen eines Fernsprechapparates verfügt, kann die CLIP-Nachricht von der Steuereinheit MP direkt auf der Anzeigevorrichtung DIS zur Anzeige gebracht und der Ruf vom Bediener entgegengenommen werden. Für den Bediener des Endgerätes TER ist jedoch allein durch die Anzeige einer Rufnummer auf der Anzeigevorrichtung DIS noch nicht unbedingt klar, wie der Namen des Kommunikationspartners CP lautet. Der Bediener kann dann z.B. durch einen Tastendruck auf eine der Tasten des Tastenfeldes KEY das Senden einer Abfragenachricht mit der Rufnummerninformation aus der CLIP-Nachricht auf der Verbindung VL an den Server CS auslösen. Dieser antwortet dann mit einer Nachricht, in welcher der Name des anrufenden Kommunikationspartners CP enthalten ist, so daß das Endgerät TER diesen Namen auf der Anzeigevorrichtung DIS anzeigen kann. Es ist jedoch auch möglich, daß das Endgerät TER eine solche Namensabfrage bei jedem ankommenden Ruf automatisch, ohne vorherige Bedienhandlung des Bedieners, an den Server CS sendet und so den Bedienkomfort erhöht.

Weiterhin kann das Endgerät TER die Daten des Servers CS vor dem Aufbau eines Rufes nutzen. Auf dem Server CS könnte z.B. ein Adreßbuch abgelegt sein, das die Namen und die Rufnummern eines ausgewählten Personenkreises enthält und für das Endgerät TER konfiguriert ist. Der Inhalt des Adreßbuches wird durch Interaktion zwischen Endgerät TER und Server CS dem Bediener zugänglich gemacht. Dabei werden Abfragen nach Daten an den Server CS gesendet und der Server CS antwortet darauf mit geeigneten Daten. Der Bediener kann durch Tastendruck an dem Tastenfeld KEY Abfragen nach Daten an den Server CS senden. Die Einträge des Adreßbuches, z.B. Namen und Wohnort von Gesprächspartnern, werden abhängig von dem jeweiligen Tastendruck des Bedieners als Daten vom Server CS an das Endgerät TER gesendet und dort über die Anzeigevorrichtung DIS angezeigt. Aus dem Adreßbuch kann der Bediener dann per Tastendruck auf dem Tastenfeld KEY einen Eintrag auswählen. Das Endgerät TER fragt die Rufnummer des zu diesem Eintrag gehörenden Teilnehmeranschlusses beim Server CS ab und verwendet die Rufnummer zum Rufaufbau an den Teilnehmeranschluß.

Mit Hilfe der Daten des Servers CS kann das Endgerät TER abhängig von vorangegangenen Bedienschritten des Bedieners die Belegung der Tasten des Tastenfeldes KEY mit Funktionen verändern, die mit einem Druck auf einzelne Tasten am Endgerät TER jeweils abgerufen werden können. Die aktuelle Belegung der Tasten mit Funktionen wird dann z.B. durch Anzeige von Symbolen oder Texten auf der Anzeigevorrichtung DIS sichtbar gemacht. Dem Bediener steht damit eine Menüführung zur Verfügung, die mit den Daten des Servers CS an die aktuelle Situation angepaßt wird. Dem Bediener werden so die Funktionen des Endgerätes TER durch das Zusammenwirken von dem Server CS und dem Endgerät TER angeboten.

Auch während einer Verbindung mit einem Kommunikationspartner CP können die Komfortfunktionen des Endgerätes TER genutzt werden. Wenn das Endgerät TER z.B. in einem ISDN-Telekommunikationsnetz verwendet wird, so kann sich ein dritter Kommunikationspartner mit seinem Rufwunsch zu dem Endgerät TER durch das ISDN-Komfortmerkmal "Anklopfen" bemerkbar machen. Das Endgerät TER empfängt dann eine Nachricht mit der Rufnummer des anklopfenden dritten Kommunikationspartners, die es mit Hilfe der Daten des Server CS, wie oben im Zusammenhang mit der CLIP-Nachricht bereits beschrieben, in eine Namensanzeige auf der Anzeigevorrichtung DIS umsetzen kann.

Durch die zentrale Datenhaltung und Datenpflege in dem Server CS ist es möglich, die Funktionen für ein einzelnes Endgerät TER, wie auch für eine Gruppe von solchen Endgeräten gemeinsam an zentraler Stelle wechselnden Erfordernissen anzupassen. Die Daten für diese Funktionen werden entweder nur bei Bedarf, wie z.B. bei einem ankommenden Ruf, abgefragt oder im Rahmen eines Software-Updates in das Endgerät TER geladen, der durch den Bediener oder den Diensteanbieter veranlaßt wird. So verfügt der Bediener jeweils über aktuelle Daten für sein Endgerät TER.

Ist das paketvermittelte Telekommunikationsnetz ein ISDN-Telekommunikationsnetz, so wird üblicherweise ein reiner Datenaustausch auf einem sogenannten D-Kanal einer Verbindungsleitung abgewickelt, ein Austausch von Sprachinformation auf einem B-Kanal. Auf dem D-Kanal kann auch die Verbindung VL zwischen Endgerät TER und dem Server CS aufgebaut werden. Diese Verbindung kann sowohl als eine separate Datenverbindung für jede Anforderung von Daten erneut aufgebaut werden, als auch als eine virtuelle Verbindung fest etabliert werden. Im Rahmen des Euro-ISDN-Protokolles "E-DSS1" ist eine solche virtuelle Verbindung vorgesehen.

Wenn das Telekommunikationsnetz ein Mobilfunk-Telekommunikationsnetz und demzufolge das Endgerät TER ein Endgerät für ein Mobilfunk-Telekommunikationsnetz ist, kann die Verbindung VL auf einem Datenkanal, z.B. auf einem Dienstkanal, unterhalten werden. Die Vermittlungsstelle VST ist dann eine Mobilfunk-Vermittlungsstelle, die im GSM-Standard (Global System for Mobile Communications) als Mobile services Switching Centre (MSC) bezeichnet wird. Der Abschnitt der Verbindung VL von der Vermittlungsstelle VST zu dem Endgerät TER wird dann mit Hilfe einer sogenannten Base Station Control (BSC) und zumindest einer Base Transceiver Station (BTS) gebildet, die von der BSC gesteuert wird und eine Funkstrecke zu dem Endgerät TER unterhält. Idealerweise befindet sich der Server CS nahe bei der Vermittlungsstelle VST, so daß nur kurze Leitungsabschnitte und wenige Einrichtungen innerhalb des Mobilfunk-Telekommunikationsnetzes von der Verbindung VL betroffen sind. Es ist aber auch möglich, daß das Endgerät TER aus dem Einzugsbereich der Mobilfunk-Vermittlungsstelle VST herausbewegt wird. Dann kann die Verbindung VL auch über andere, in der Figur nicht dargestellten Einrichtungen des Mobilfunk-Telekommunikationsnetzes, insbesondere über eine mit der Vermittlungsstelle VST vergleichbare Vermittlungsstelle führen. Auf diese Weise kann das Endgerät TER ständig von dem Server CS, wie bereits beschrieben, Daten empfangen und so z.B. Sonderfunktionen oder Komfortfunktionen erbringen. Da von dem Endgerät TER die Verbindung VL zu dem Server CS auch bei einem Mobilfunk-Telekommunikationsnetz parallel zu der Verbindung VC zu dem Kommunikationspartner CP bestehen kann, kann das Endgerät TER gleichzeitig Daten für Funktionen laden und eine Kommunikation mit dem Kommunikationspartner CP anbieten.

Der Server CS kann aber auch über einen sogenannten Short Message Service (SMS) eines Mobilfunk-Telekommunikationsnetzes die Verbindung VL zu dem Endgerät TER unterhalten. Im Rahmen einer Verbindung VL über den Short Message Service gelten ebenfalls die bereits im Zusammenhang mit einer Verbindung VL auf einem Dienstkanal eines Mobilfunk-Telekommunikationsnetzes erwähnten Leistungsmerkmale des Endgerätes TER , insbesondere das gleichzeitige Laden von Daten für Funktionen und Kommunizieren mit dem Kommunikationspartner CP.

Vorteilhaft erweist sich die Erfindung auch dann, wenn ein Teilnehmer mehrere Endgeräte benutzt, um Telekommunikationsdienstleistungen in Anspruch zu nehmen. Der Teilnehmer wird es dann besonders zu schätzen wissen, wenn ihm an jedem dieser Endgeräte die gleichen oder zumindest ähnliche Funktionen zur Verfügung stehen, z.B. wenn jedes der Geräte eine möglichst identische Belegung von Tasten mit Funktionen oder eine ähnliche Menüführung aufweist. Dies wird erreicht, indem jedes der Geräte von einem Server in einer Weise zusammenarbeitet, wie es bereits anhand des Endgerätes TER und dem Server CS beschrieben wurde.

Werden von dem Teilnehmer sowohl Telekommunikationsdienste eines Mobilfunk-Telekommunikationsnetzes als auch Telekommunikationsdienste eines leitungsgebundenen Telekommunikationsnetzes, z.B. eines ISDN-Telekommunikationsnetzes, jeweils mit einem für das jeweilige Telekommunikationsnetz geeigneten Endgerät genutzt, kann ein Server jeweils eine virtuelle Verbindung zu jedem dieser Endgeräte parallel unterhalten, z.B. bei dem Mobilfunk-Telekommunikationsnetz eine Verbindung über einen Short Message Service und bei dem leitungsgebundenen Telekommunikationsnetz eine Verbindung über einen ISDN-D-Kanal. Der Server CS in der Figur kann z.B. neben dem Endgerät TER ein zweites, in der Figur nicht dargestelltes Endgerät über eine weitere, mit der Verbindung VL vergleichbare und in der Figur ebenfalls nicht dargestellte Verbindung mit Daten zur Erbringung von Funktionen versorgen. Beide Endgeräte, das Endgerät TER und das zweite Endgerät, können dann die bereits erwähnten Komfortfunktionen bieten, z.B. das Umsetzen einer CLIP-Nachricht mit der Rufnummer eines Anrufenden in den Namen des Anrufenden. Weil der Server CS beide Endgeräte mit Daten versorgt, können diese Daten zentral in dem Server CS gepflegt oder durch das Einbringen neuer Daten für neue Funktionen ergänzt werden. Es kann auch in jedem der beiden Telekommunikationsnetze ein eigener Server eingesetzt werden, insbesondere dann, wenn die in den jeweiligen Telekommunikationsnetzen zu erbringenden Funktionen auf das jeweilige Telekommunikationsnetz oder das jeweilige Endgerät besonders angepaßt sein müssen oder wenn die Telekommunikationsnetze sehr unterschiedliche Infrastrukturen aufweisen, so daß eine Verbindung zwischen den Endgeräten unterschiedlicher Telekommunikationsnetze und einem gemeinsamen Server nur schwer unterhalten werden kann. Dann kann z.B. neben dem Server CS ein weiterer, in der Figur nicht dargestellter Server, das zweite Endgerät anstelle des Servers CS mit Daten zur Erbringung von Funktionen versorgen. Werden beide Server dann hinsichtlich des Leistungsumfanges und der Ausgestaltung der an den jeweiligen Endgeräten zu erbringenden Funktionen aufeinander abgestimmt, arbeiten die beiden Server zwar jeweils individuell mit den jeweiligen Endgeräte zusammen und benutzen dazu unterschiedliche Verbindungen, doch stehen dem Bediener an beiden Endgeräten die gleichen oder zumindest ähnliche Funktionen zur Verfügung.

## Patentansprüche

1. Verfahren zum Bereitstellen von Funktionen an einem (ersten) Endgerät (TER) für ein Telekommunikationsnetz,
bei welchem Verfahren das Endgerät (TER) über zumindest eine erste Verbindung (VC) mit zumindest einer ersten Kommunikationspartnereinrichtung (CP) verbindbar ist
und bei welchem Verfahren die Funktionen an dem Endgerät (TER) mit Hilfe von Daten erbracht werden können, die von einer Datenbereitstellungseinrichtung (CS) in das Endgerät (TER) geladen werden,
**dadurch gekennzeichnet,**
daß parallel zu der ersten Verbindung (VC) eine zweite Verbindung (VL) über eine Teilnehmeranschlußleitung zwischen dem Endgerät (TER) und der Datenbereitstellungseinrichtung (CS) eingerichtet wird
und daß die Daten von der Datenbereitstellungseinrichtung (CS) an das Endgerät (TER) über die zweite Verbindung (VL) gesendet werden.

2. Verfahren nach Anspruch 1, dadurch gekennzeichnet, daß für die zweite Verbindung (VL) eine Standleitung eingesetzt wird.

3. Verfahren nach Anspruch 1, dadurch gekennzeichnet, daß für die zweite Verbindung (VL) eine virtuelle Leitung eingesetzt wird.

4. Verfahren nach Anspruch 1 oder 2, dadurch gekennzeichnet, daß als zweite Verbindung (VL) eine paketvermittelte Verbindung eingesetzt wird.

5. Verfahren nach einem der Ansprüche 1-4, dadurch gekennzeichnet, daß als Teilnehmeranschlußleitung eine Teilnehmeranschlußleitung eines ISDN-Telekommunikafionsnetzes eingesetzt wird und die zweite Verbindung (VL) auf dem D-Kanal der Teilnehmeranschlußleitung unterhalten wird.

6. Verfahren nach einem der Ansprüche 1-3, dadurch gekennzeichnet, daß als Teilnehmeranschlußleitung ein Teilnehmeranschluß eines Mobilfunk-Telekommunikationsnetzes eingesetzt wird und die zweite Verbindung (VL) auf einem Datenkanal des Teilnehmeranschlusses unterhalten wird.

7. Verfahren nach einem der Ansprüche 1-3, dadurch gekennzeichnet, daß als Teilnehmeranschlußleitung ein Teilnehmeranschluß eines Mobilfunk-Telekommunikationsnetzes eingesetzt wird und die zweite Verbindung (VL) mit Hilfe von Nachrichten aus einem Short Message Service unterhalten wird, die über den Teilnehmeranschluß ausgetauscht werden.

8. Verfahren nach Anspruch 1, dadurch gekennzeichnet, daß bei dem Verfahren zusätzlich zu dem (ersten) Endgerät (TER) ein zweites Endgerät eingesetzt wird, das zumindest über eine dritte Verbindung mit einer zweiten Kommunikationspartnereinrichtung verbindbar ist, daß zweite Funktionen an dem zweiten Endgerät mit Hilfe von Daten erbracht werden können, die von der Datenbereitstellungseinrichtung (CS) oder einer mit dieser vergleichbaren zweiten Datenbereitstellungseinrichtung in das zweite Endgerät geladen werden, daß die zweiten Funktionen auf die Funktionen abgestimmt werden, die an dem ersten Endgerät (TER) erbracht werden, daß parallel zu der dritten Verbindung eine mit der zweiten Verbindung (VL) vergleichbare vierte Verbindung über eine Teilnehmeranschlußleitung zwischen dem zweiten Endgerät und der Datenbereitstellungseinrichtung (CS) oder der zweiten Datenbereitstellungseinrichtung eingerichtet wird und daß die Daten von der Datenbereitstellungseinrichtung (CS) oder der zweiten Datenbereitstellungseinrichtung an das zweite Endgerät über die vierte Verbindung gesendet werden.

9. Endgerät (TER) für ein Telekommunikationsnetz mit Einrichtungen zum Bereitstellen von Funktionen an dem Endgerät (TER),
das über zumindest eine erste Verbindung (VC) mit zumindest einer ersten Kommunikationspartnereinrichtung (CP) verbindbar ist,
und das die Funktionen mit Hilfe von Daten erbringen kann, die das Endgerät (TER) von einer Datenbereitstellungseinrichtung (CS) empfängt,
**dadurch gekennzeichnet,**
daß zwischen dem Endgerät (TER) und der Datenbereitstellungseinrichtung (CS) eine zweite Verbindung (VL) über eine Teilnehmeranschlußleitung parallel zu der ersten Verbindung (VC) eingerichtet werden kann
und daß von dem Endgerät (TER) die Daten der Datenbereitstellungseinrichtung (CS) über die zweite Verbindung (VL) empfangen werden können.

10. Datenbereitstellungseinrichtung (CS) zur Bereitstellung von Daten zur Durchführung von Funktionen in einem Endgerät (TER) für ein Telekommunikationsnetz,
wobei zwischen der Datenbereitstellungseinrichtung (CS) und dem Endgerät (TER) eine Verbindung (VL) über eine Teilnehmeranschlußleitung einrichtbar ist und die Datenbereitstellungseinrichtung (CS) die Daten an das Endgerät (TER) über die Verbindung (VL) senden kann,
**dadurch gekennzeichnet,**
daß die Verbindung (VL) als eine Standleitung oder eine virtuelle Leitung einrichtbar ist.
